**Europäisches Patentamt**

**European Patent Office**

**Office européen des brevets**

(19)

(11) **EP 0 755 131 A2**

# (12) EUROPÄISCHE PATENTANMELDUNG

(43) Veröffentlichungstag:
22.01.1997 Patentblatt 1997/04

(51) Int. Cl.$^6$: **H04B 7/08**

(21) Anmeldenummer: 96109723.5

(22) Anmeldetag: 18.06.1996

(84) Benannte Vertragsstaaten:
**DE ES FR GB IT**

(30) Priorität: **17.07.1995 DE 19525630**
**16.08.1995 DE 19530021**

(71) Anmelder: **Hagenuk Telecom GmbH**
**24118 Kiel (DE)**

(72) Erfinder:
• **Riechers, Jan**
**24103 Kiel (DE)**
• **Rogall, Jürgen**
**24211 Preetz (DE)**

(74) Vertreter: **Hansmann, Dierk, Dipl.-Ing. et al**
**Patentanwälte**
**Hansmann-Klickow-Hansmann**
**Jessenstrasse 4**
**22767 Hamburg (DE)**

## (54) Vorrichtung zur Steuerung von Antennen

(57) Die Vorrichtung dient zur Steuerung von Antennen einer Sende-/Empfangseinrichtung für Funksignale. Die Vorrichtung weist eine Einrichtung zur Messung einer Empfangsfeldstärke, einer Einrichtung zur Detektion von Synchronisationsausfällen, eine Einrichtung zur Detektion von Bitfehlern, eine Steuereinheit und einen Antennenumschalter auf. Es ist eine Übertragung der von den drei Meßeinrichtungen innerhalb eines Empfangszeitraumes für diesen Zeitraum gemessenen Feldstärke sowie von Informationen über das Vorliegen von Synchronisationsausfällen und Bitfehlern zur Steuereinheit vorgesehen. Die Steuereinheit weist einen Analysator auf, der anhand dieser drei Meßwerte für die folgenden Empfangszeitraum eine von mehreren Antennen zum Empfang auswählt und entsprechend den Antennenumschalter ansteuert.

Fig. 1

EP 0 755 131 A2

## Beschreibung

Die Erfindung betrifft eine Vorrichtung zur Steuerung von Antennen einer Sende-/Empfangseinrichtung für Funksignale, die eine Einrichtung zur Messung einer Empfangsfeldstärke, eine Einrichtung zur Detektion von Synchronisationsausfällen, eine Einrichtung zur Detektion von Bitfehlern, eine Steuereinheit und einen Antennenumschalter aufweist.

Die Erfindung betrifft darüber hinaus ein Verfahren zur Steuerung von Antennen, bei dem eine Empfangsfeldstärke, Synchronisationsausfälle und Bitfehler gemessen werden.

Die Übertragung soll als digitales Zeitschlitzverfahren (TDMA) organisiert sein. Die Daten werden dabei in sogenannten Zeitschlitzen übertragen, die ihrerseits zu einer Rahrnenstruktur zusammengefaßt sind. Außerdem kann es sich um Vollduplex-Verbindungen handeln (TDD). Innerhalb eines TDMA-Rahmens stehen bei Anwendungen im Bereich von Mobiltelefonen eine Hälfte der Zeitschlitze für die Verbindung von Mobilteil zur Basisstation und die andere Hälfte in umgekehrter Reihenfolge zur Verfügung. Neben der Basisstation kann auch das Mobilteil mit mehreren Sende-/Empfangsantennen ausgestattet sein.

Bei der Nachrichtenübertragung mittels Funkwellen kommt es aufgrund von Reflexionen, Beugung und Streuung zu einer Mehrwegeausbreitung. Für Übertragungen im Gigahertz-Bereich bedeutet dies, daß sich die Empfangsverhältnisse in einem räumlich sehr begrenzten Bereich (einige Zentimeter) stark ändern können und ein sogenannter Fading-Kanal vorliegt. Bewegt sich der Empfänger, so wird aus diesem räumlichen Effekt eine zeitliche Variation der Empfangsverhältnisse. Deutlich wird dies am zeitlichen Verlauf der Empfangsfeldstärke eines bewegten Empfängers (Mobilteil).

Für die Nachrichtenübertragung erweist sich die Variation der Empfangsverhältnisse als problematisch. Sinkt die Empfangsfeldstärke kurzzeitig unter die Empfindlichkeitsgrenze des Demodulators, so steigt die Bitfehlerrate (BER) deutlich an, obwohl der mittlere Empfangspegel möglicherweise eine ausreichende Verbindungsqualität vorgibt. Aus diesem Grund werden in Mobilfunksystemen verschiedene Verfahren zur Nutzung von mehreren Sende- und Empfangsantennen diskutiert (antenna diversity). Hintergrund dieses Ansatzes ist die Tatsache, daß die Empfangssignale räumlich getrennter Antennen unterschiedliche zeitliche Variationen zeigen. Es besteht also die Möglichkeit, Verschlechterungen der Empfangsverhältnisse durch ein Umschalten auf eine andere Antenne zu begegnen. Statistische Untersuchungen zeigen, daß in den meisten Fällen nicht gleichzeitig ein tiefer Feldstärkeeinbruch (Fade) auf den Empfangssignalen verschiedener Antennen vorliegt (sofern die jeweiligen Ausbreitungsbedingungen unterschiedlich sind). Durch die Umschaltung läßt sich also das Absinken des Signalpegels in Fades weitestgehend verhindern.

Es sei hier angemerkt, daß die unterschiedlichen Empfangssignale nicht nur durch räumliche Trennung der Antennen (space diversity) sondern auch durch Trennung im Frequenzbereich (frequency diversity) oder unterschiedliche Polarisation (polarisation diversity) erreicht werden können.

Entscheidend für den Gewinn, der sich aus einer Diversity Anordnung erzielen läßt, ist das Verfahren mit dem die Antennen für die Demodulation ausgewählt werden. Grundsätzlich wird zwischen dem sogenannten Selection Diversity und Switching Diversity unterschieden. Bei Selection Diversity steht für jede Antenne eine Empfangseinheit zur Verfügung, so daß die Empfangssignale direkt miteinander verglichen werden können und für die Demodulation das günstigste ausgewählt wird. Im Gegensatz dazu wird bei Switching Diversity nur eine Empfangseinheit verwendet und die Antennen werden wahlweise angeschaltet.

Aus Kostengründen erweist sich Switching Diversity als bevorzugtes Verfahren für die Praxis. Allerdings sind hierbei nur die Empfangsverhältnisse der aktuellen Antenne bekannt. Das Verfahren zur Antennenumschaltung kann also nur diese Daten zur Entscheidung nutzen. Die Verhältnisse auf der oder den anderen Antennen sind vor einem Wechsel nicht bekannt.

Bei der Anwendung von Switching Diversity kann neben der Basisstation auch das Mobilteil die Empfangsverhältnisse untersuchen und Antennenumschaltungen durchführen. Dabei kann neben der Basisstation auch das Mobilteil mit mehreren Sende-/Empfangsantennen ausgestattet sein.

In der europäischen Patentanmeldung EP 0 620 657 AI wird ein Verfahren vorgeschlagen, das als Umschaltkriterium das Auftreten von Bitfehlern verwendet. Eine Einheit zur Detektion von Bitfehlern prüft, ob innerhalb eines Zeitschlitzes (Slots) Bitfehler bei der Übertragung aufgetreten sind. Das Ergebnis wird an eine Steuereinheit geliefert, die den Antennenwechsel veranlaßt. Bei einem wiederholten Auftreten von Bitfehlern in zeitlich benachbarten Zeitschlitzen wird ein Antennenwechsel durchgeführt. Die Anzahl der Zeitschlitze, die in direkter Abfolge Fehler aufweisen müssen, um eine Umschaltung hervorzurufen, wird im Voraus festgelegt. Problematisch an diesem Verfahren ist die Tatsache, daß somit erst eine größere Anzahl von Bitfehlern auftreten muß, bevor die Antenne gewechselt wird. Außerdem erweist sich die Forderung nach einem Auftreten der Bitfehler in benachbarten Zeitschlitzen als ungünstig. Treten in einer Zeitspanne massiv Bitfehler auf, wobei allerdings in gewissen Abständen fehlerfreie Zeitschlitze empfangen werden, findet kein Antennenwechsel statt.

Demgegenüber wird in der deutschen Patentanmeldung DE 42 36 134 AI ein Verfahren vorgeschlagen, das die Empfangsfeldstärke (RSSI - Received Signal Strength Indicator) zur Steuerung der Antennenumschaltung vorsieht. Dazu ist eine Einrichtung zur Messung des RSSI-Werts für einen Zeitschlitz erforderlich. Sobald der aktuelle RSSI-Wert unter einen Schwellwert fällt, wird von der aktuell genutzten Antenne auf eine andere umgeschaltet. Es wird also bereits bei sinkender Empfangsfeldstärke umgeschaltet und nicht erst bei einem Auftreten von Bitfehlern. Der Schwellwert wird dabei adaptiv eingestellt. Dies geschieht durch fortgesetzte Messung des RSSI-Werts während der Übertragung. Für die aktuell genutzte Empfangsantenne wird der maximale RSSI-Wert der empfangenen Zeitschlitze festgehalten. Der Schwellwert ergibt sich aus diesem Maximalwert, vermindert um einen fest vorgegebenen Wert (delta). Die feste Definition dieses Wertes (delta) erweist sich in praktischen Systemen als ungünstig. Ist der Signalpegel niedrig, muß delta einen kleinen Wert darstellen, damit die Antenne vor Erreichen der Empfindlichkeitsgrenze des Empfängers gewechselt wird. Andererseits führt ein niedriger Wert für delta dazu, daß die Antenne bei einer geringfügigen Verschlechterung des RSSI-Werts bereits gewechselt wird, auch wenn der absolute Pegel noch so hoch liegt, daß eine Übertragung problemlos möglich ist. In diesem Fall droht sogar eine Verschlechterung der Übertragungsqualität durch einen Antennenwechsel.

Außerdem wird in der deutschen Patentanmeldung DE 42 36 134 Al nicht berücksichtigt, daß es aufgrund der Mehrwegeausbreitung zu Laufzeit-Effekten kommen kann (Intersymbol-Interferenz). Dies bedeutet, daß sich zeitlich benachbarte Symbole (Bits) am Empfänger so stark beeinflussen können, daß es zu FeWentscheidungen kommt. In diesem Fall kann es zu einem starken Anstieg der Bitfehlerrate kommen, ohne daß sich dies in der Höhe der Empfangsfeldstärke (RSSI) äußert. Das angesprochene Verfahren kann auf diese Situation nicht reagieren.

Es zeigt sich, daß bei dem heutigen Stand der Technik die Steuerung der Antennenumschaltung für Switching Diversity noch nicht sehr erfolgreich realisiert wird. Das grundsätzliche Problem bei der heutigen Technik besteht darin, daß eine Umschaltung erst nach dem Eintritt einer spürbaren Verschlechterung erfolgt. Somit läßt sich die gewünschte Verbesserung der Übertragungsqualität nur bedingt erreichen. Ziel der Erfindung ist es also, die Steuerung der Antennenumschaltung zu verbessern und damit die Übertragungsqualität spürbar zu erhöhen.

Aufgabe der vorliegenden Erfindung ist es daher, eine Vorrichtung der einleitend genannten Art derart zu konstruieren, daß durch geeignete Antennenumschaltungen die Empfangsqualität erhöht werden kann.

Diese Aufgabe wird erfindungsgemäß dadurch gelöst, daß eine Übertragung der von den drei Meßeinrichtungen innerhalb eines Empfangszeitraumes für diesen Zeitraum gemessenen Feldstärke sowie von Informationen über das Vorliegen von Synchronisationsausfällen und Bitfehlern zur Steuereinheit vorgesehen ist und daß die Steuereinheit einen Analysator aufweist, der anhand dieser drei Meßwerte für den folgenden Empfangszeitraum eine von mehreren Antennen zum Empfang auswählt und entsprechend den Antennenumschalter ansteuert.

Weitere Aufgabe der vorliegenden Erfindung ist es, ein Verfahren der einleitend genannten Art derart zu verbessern, daß die Übertragungsqualität durch Antennenumschaltung erhöht wird.

Diese Aufgabe wird erfindungsgemäß dadurch gelöst, daß zu jedem gemessenen RSSI-Wert in der Steuereinheit unter Verwendung der n letzten RSSI-Werte (RSSIL/T-i), i = 1, ..., n) ein Vorhersagewert (PRED) für RSSI(T) berechnet wird und ein Antennenwechsel dann durchgeführt wird, wenn ein Synchronisationsausfall vorliegt, mehr als N Zeitschlitze von den letzten M ZeitscWitzen Bitfehler enthielten oder PRED um mehr als ein fest definierter Wert unter RSSI(T) hegt.

Als wesentlich für die Erfindung ist insbesondere anzusehen, daß die Steuerung der Antennenumschaltung auf der Grundlage von Vorhersagewerten des RSSI-Verlaufs für den nächstfolgenden Zeitschlitz erfolgt. Somit erfolgt die Entscheidung zu einem Antennenwechsel nicht durch eine bereits eingetretene Verschlechterung, sondern frühzeitig durch die Vorhersage einer Verschlechterung in der nahen Zukunft. Außerdem werden sowohl RSSI-Werte als auch Bitfehler und Synchronisationsausfälle bei der Entscheidungsbildung berücksichtigt. Auf diesem Weg werden neben den Variationen der Empfangsfeldstärke auch mögliche Laufzeit-Effekte vemindert und dadurch die Übertragungsqualität deutlich verbessert.

In der Empfangseinrichtung befindet sich in der erfindungsgemäßen Anordnung eine Meßeinrichtung für den RSSI-Wert eines Slots sowie je eine Detektionseinheit für Synchronisationsausfälle und Bitfehler. Während einer Übertragung messen diese Einheiten jeweils für den aktuellen Slot den RSSI-Wert sowie das Auftreten von Synchronisationsausfällen und Bitfehlern. Die Ausgangssignale dieser drei Meß- bzw. Detektionseinheiten stehen einer Steuereinheit zur Antennenumschaltung zur Entscheidungsbildung zur Verfügung.

Für den RSSI-Wert wird anhand der n letzten Werte ein Vorhersagewert für den folgenden Zeitschlitz berechnet. Dies geschieht durch Verwendung eines sogenannten linearen Prädiktors n-ten Grades. Wenn der Vorhersagewert eine deutliche Verschlechterung der Empfangsfeldstärke ankündigt, wird ein Antennenwechsel durchgeführt. Sofern der Signalpegel allerdings noch so hoch liegt, daß Fading kein Problem darstellt, findet keine Umschaltung statt. Durch diese Vorgehensweise wird nicht erst bei einer deutlichen Minderung des RSSI-Werts umgeschaltet, sondern sobald sich aus dem bisherigen Verlauf eine Verschlechterung vorhersagen läßt. Ein unnötiges und eventuell verschlechterndes Umschalten bei hohem Pegel wird somit verhindert.

Zusätzlich wird bei Synchronisationsausfällen und einer Häufung von Bitfehlern ein Antennenwechsel durchgeführt. Auf diesem Weg gelingt es, neben den Feldstärkevariationen auch die Laufzeiteffekte wirkungsvoll zu reduzieren und einen größeren Diversity-Geminn als bei den bekannten Verfahren zu erzielen.

In der Zeichnung sind Ausführungsbeispiele der Erfindung schematisch dargestellt. Es zeigen:

Fig. 1    eine Empfangseinrichtung mit zwei oder mehr Antennen, die über die eine Steuereinheit kontrolliert werden,

Fig. 2    ein Flußdiagramm des Verfahrens, das in der Steuereinheit die Umschaltung der Antennen regelt,

Fig. 3    einen linearen Prädiktor n-ten Grades in einer Darstellung als lineares Prädikationsfilter, das im Symboltakt arbeitet,

Fig. 4    ein Flußdiagramm des einen RSSI-Kriteriums A, das über den Vergleich von Vorhersagewert und gemessenem RSSI-Wert einen Antennenwechsel anfordert
**und**

Fig. 5    ein Flußdiagramm des erfindungsgemäßen RSSI-Kriteriums B, das bei der Vorhersage einer deutlichen Verschlechterung der RSSI-Werte einen Antennenwechsel anfordert.

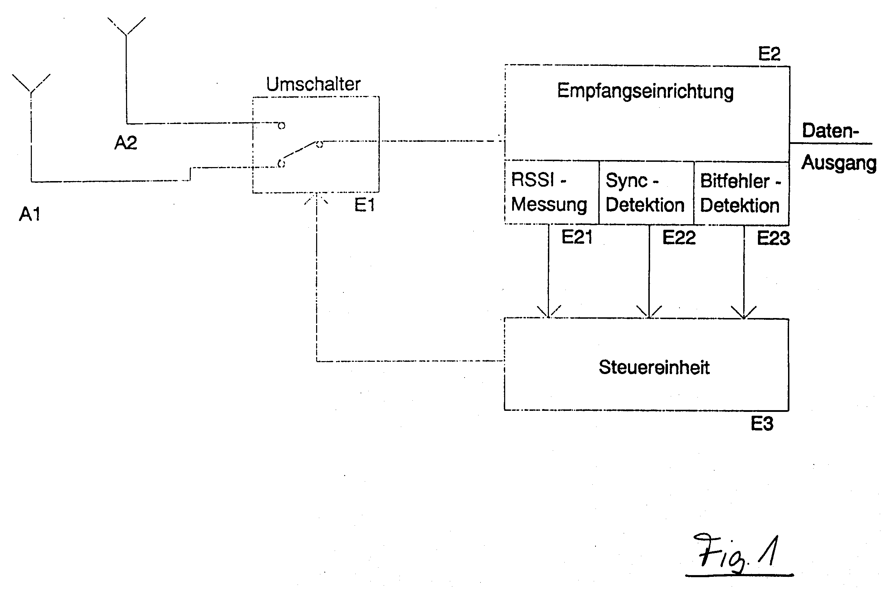

Die Anordnung besteht gemäß der Ausführungsform in Fig. 1 aus zwei oder mehr Sende- / Empfangsantennen (A1, A2), die über einen Umschalter (E1) mit der Empfangseinrichtung (E2) verbunden sind. In der Empfangseinrichtung (E2) sind neben den Elementen zur Demodulation des empfangenen Signals drei weitere Einheiten vorgesehen. Dabei handelt es sich um eine Meßeinrichtung für den RSSI-Wert des aktuell empfangenen Slots (E21), eine Einheit zur Detektion von Synchronisationsausfällen (E22) sowie eine Einheit zur Erkennung von Bitfehlern innerhalb eines Slots (E23).

Diese drei Meß- / Detektionseinheiten sind mit einer zentralen Steuereinheit (E3) verbunden. Der Steuereinheit 8E3) wird somit im Anschluß an den Empfang eines Slots der RSSI-Wert (RSSI(T), das Vorliegen eines Synchronisationsausfalls (SYNC - AUSFALL(T)) sowie das Auftreten von Bitfehlern (BITFEHLER(T)) mitgeteilt. Anhand dieser Daten leitet die Steuereinheit bei Bedarf einen Antennenwechsel für den folgenden Zeitschlitz ein. Das zentrale Kriterium für eine Umschaltung ist der Vorhersagewert für den RSSI-Wert des folgenden Slots. Zusätzlich wird allerdings auch das Auftreten von Synchronisationsausfällen und Bitfehlern in die Entscheidungsbildung einbezogen. Der Antennenwechsel erfolgt über ein entsprechendes Steuersignal an den Antennen-Umschalter (E1).

Im folgenden wird das Verfahren beschrieben, auf dessen Grundlage die Steuereinheit (E3) entscheidet, wann ein Antennenwechsel nötig ist, um eine Verschlechterung der Übertragungsverhältnisse zu verhindern. Das Verfahren kann durch eine logische Schaltung mit Speicherelementen oder zweckmäßigerweise auf einem Mikroprozessor realisiert werden.

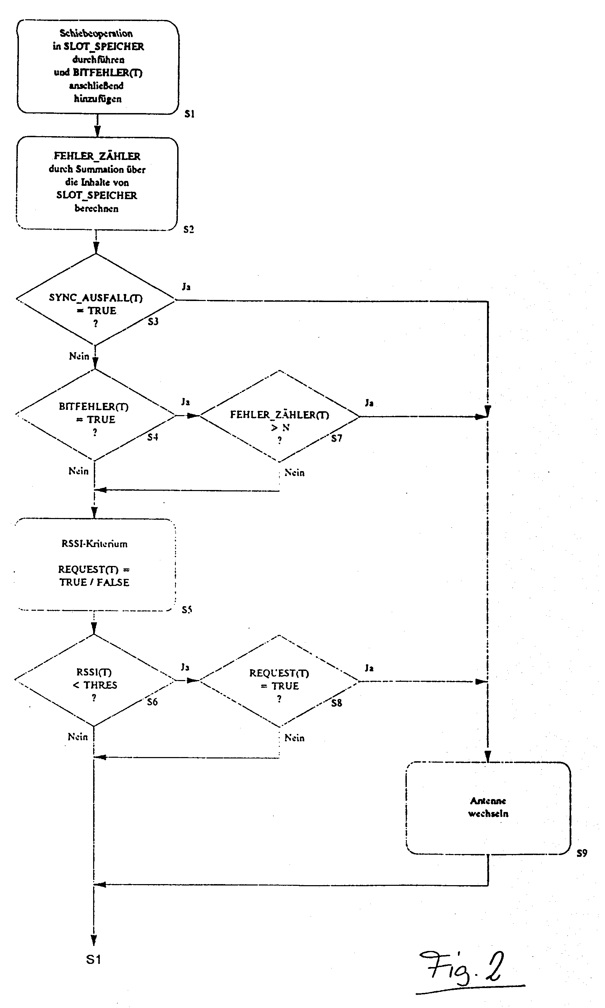

Zum Zeitpunkt T empfängt die Steuereinheit (E3) die Meßsignale RSSI(T), SYNC - AUSFALL(T) und BITFEHLER(T). Hierbei handelt es sich bei SYNC - AUSFALL('T) und BITFEHLER(T) um binäre Signale, wogegen RSSI(T) ein digitales Signal (zB 8 Bit) darstellt. Nüt diesen Eingangswerten wird das in Fig. 2 dargestellte Flußdiagramm durchlaufen. Intern wird ein binäres Schieberegister (SLOT - SPEICHER) mit M Elementen vorgesehen, um festzuhalten, welche der vergangenen M Zeitschlitze fehlerhaft gewesen sind. Die Anzahl der fehlerhaften Slots ergibt sich aus der Summation über die M Register von SLOT-SPEICHER und wird in FEHLER - ZÄHLER(T) abgelegt. Außerdem wird ein binäres Signal REQUEST(T) verwendet, um die Anforderung eines Antennenwechsels durch das weiter unten beschriebene RSSI-Kriterium auszudrükken.

Nach Empfang der drei Meßsignale RSSI(T), SYNC-AUSFALL(T) und BITFFEHLER (T) findet zuerst eine Schiebeoperation in SLOT - SPEICHER statt (Schritt 1). Dadurch wird der älteste Wert aus dem Schieberegister geschoben. Anschließend wird der aktuelle Wert von BITFEHLER(T) - also 1 für TRUE oder 0 für FALSE - als neuester Wert in das frei gewordene Register von SLOT-SPEICHER eingetragen. In Schritt 2 wird dann der aktuelle Wert von FEHLER-ZÄHLER durch Summation über die Inhalte der Register von SLOT-SPEICHER gebildet.

Danach wird in Schritt 3 überprüft, ob ein Synchronisationsausfall aufgetreten ist. Sollte dies der Fall sein, wird direkt ein Antennenwechsel eingeleitet (Schritt 9). Anderenfalls wird das Vorliegen von Bitfehlern abgefragt (Schritt 4), Ist BITFEHLER(T) auf TRUE gesetzt, wird zu Schritt 7 übergegangen und überprüft, ob von den letzten M Zeitschlitzen mehr als N fehlerhaft waren (FEHLER - ZÄHLER(T) > N). Trifft dies zu, so verursacht die Steuereinheit einen Antennenwechsel (S9). Ist BITFEHLER(T) auf TRUE gesetzt und hat FEHLER - ZÄIILER(T) einen Wert kleiner als N, wird Schritt 5 (das RSSI-Kriterium) aufgerufen. Dies ist auch der Fall wenn keine Bitfehler aufgetreten sind (BITFEHLER(T) = FALSE).

Für das erfindungsgemäße RSSI-Kriterium werden weiter unten zwei unterschiedliche Verfahren erläutert. An dieser Stelle sei nur erwähnt, daß innerhalb dieses Kriteriums über einen linearen Prädiktor der Vorhersagewert für RSSI(T+1) berechnet und als Ausgangssignal REQUEST(T) auf TRUE oder FALSE gesetzt wird.

Nachdem das RSSI-Kriterium durchlaufen wurde (S5), wird in Schritt 6 überprüft, ob RSSI(T) kleiner als ein fest definierter Schwellwert (THRES) ist. Sofern diese Bedingung erfüllt ist, wird in Schritt 8 abgefragt, ob REQUEST(T) auf TRUE gesetzt ist (Antennenwechsel angefordert). Trifft dies zu, wird die Umschaltung eingeleitet (S9). Anderenfalls wird auf die neuen Eingangswerte RSSI(T+1), SYNC - AUSFALL(T+1) und BITFEHLER(T+1) des folgenden Slots gewartet und das beschriebene Verfahren erneut durchlaufen.

Durch diesen Ablauf wird sichergestellt, daß der Diversity Algorithmus auf die unterschiedlichen Empfangssituationen gezielt reagiert. Die Variationen der Empfangsfeldstärke werden durch Anwendung des RSSI-Kriteriums (welches nachfolgend ausführlich beschrieben wird) deutlich vermindert. Sollte allerdings der RSSI-Wert so groß sein, daß die Variationen des Pegels keine Verschlechterung der Empfangsqualität verursachen, findet kein Antennenwechsel statt. Dies wird durch den Vergleich des RSSI-Werts mit dem Schwellwert (THRES) sichergestellt. Um auch bei Empfangsproblemen durch Laufzeitdifferenzen bei hohem Signalpegel einen Antennenwechsel zu ermöglichen, wird zusätzlich das Auftreten von Bitfehlern und Synchronisationsausfällen überprüft. Kommt es zu einer Häufung von fehlerhaften Slots, so wird auf eine andere Antenne umgeschaltet. Die Feststellung einer Häufung von fehlerhaften Slots wird durch Verwendung des Schieberegisters SLOT - SPEICHER realisiert. Kommt es zu Synchronisationsausfällen, kann der entsprechende Zeitschlitz nicht mehr korrekt empfangen werden. Außerdem droht der totale Verlust der Verbindung. Aus diesem Grund wird bei fehlender Synchronisation direkt die Antenne gewechselt.

Der Ablauf des Antennenwechsels ist abhängig von dem gewählten RSSI-Kriterium (die beiden Optionen werden weiter unten beschrieben) und der Anzahl der zur Verfügung stehenden Antennen. Grundsätzlich findet eine Zuweisung ( ANT - WE = n ) statt, die dem RSSI-Kriterium anzeigt, ob innerhalb der letzten n Zeitschlitze ein Antennenwechsel durchgeführt wurde. Außerdem wird bei Verwendung des RSSI-Kriteriums B die Variable MAX auf den aktuellen RSSI Wert gesetzt.

Für die Basisstation bedeutet ein Antennenwechsel, daß im folgenden Empfangszeitraum (Slot) auf eine andere Antenne für den Empfang gewechselt wird. Anders liegen die Verhältnisse beim Mobilteil. Ist das Mobilteil ebenfalls mit mehreren Antennen ausgestattet, läuft der Antennenwechsel wie in der Basis ab. Sollte das Mobilteil allerdings nur über eine Antenne verfügen, so findet statt eines Wechsel der Empfangsantenne am Mobilteil eine Umschaltung der Sendeantenne an der Basisstation statt. Dazu sendet das Mobilteil eine Anforderung zum Wechsel der Sendeantenne an die Basisstation. Diese führt daraufhin für den folgenden Sendezeitraum (Slot) eine Umschaltung der Sendeantenne durch.

Kommt es nach einem Antennenwechsel doch zu einer Verschlechterung der Empfangsverhältnisse, wird auf die ursprünglich genutzte Antenne zurückgeschaltet. Sollten mehr als zwei Antennen verwendet werden, läßt sich auch eine Weiterschaltung (zB in definierter Reihenfolge) realisieren.

In dem globalen Ablaufdiagramm der erfindungsgemäßen Diversity Anordnung wurde als zentraler Mechanismus das sogenannte RSSI-Kriterium erwähnt. Innerhalb dieses Kriteriums wird der Vorhersagewert für den RSSI-Wert des folgenden Slots berechnet. Auf dieser Grundlage wird dann entschieden, ob ein Antennenwechsel angefordert wird (REQUEST(T)). Für den Ablauf des RSSI-Kriteriums bestehen zwei Möglichkeiten, die an dieser Stelle detailliert erläutert werden.

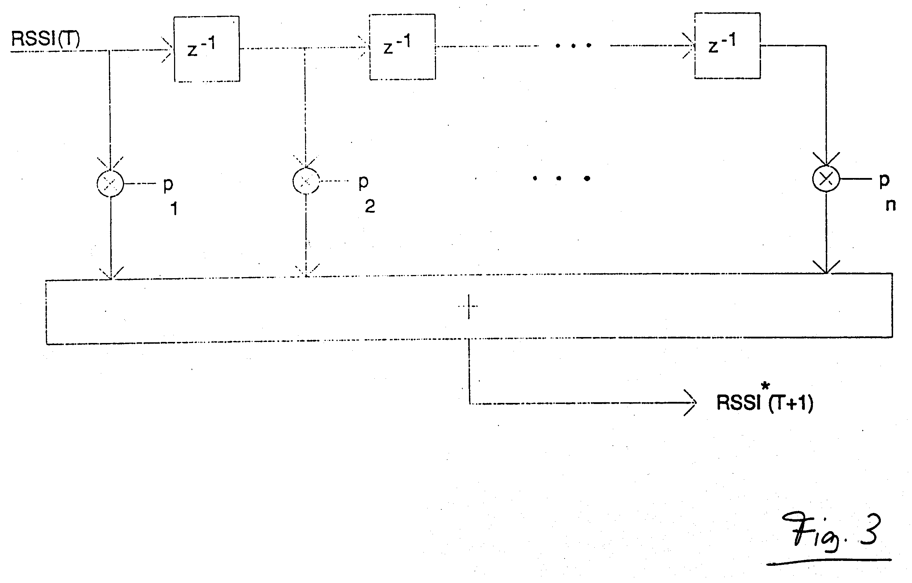

Bei beiden Verfahren wird ein linearer Prädikator n-ten Grades verwendet. Dieser Prädik-tor läßt sich anschaulich durch ein lineares Prädiktionsfilter n-ten Grades darstellen (siehe Fig. 3), das im Symboltakt arbeitet. Die aktuell gemessenen RSSI-Werte werden auf eine Verzögerungskette gegeben (Schieberegister). Der Vorhersagewert für RSSI(T+1) wird durch Addition der unterschiedlich gewichteten Vergangenheitswerte RSSI(T-1), i = 0, 1, ..., n-1, gebildet. Entscheidend ist hierbei die Festlegung der Prädiktorkoeffizienten pi. Diese Koeffizienten werden über die Autokorrelationsfolge (AKF) des Funkkanals berechnet (genauer: des empfangenen Feldstärkeverlauf). Zuerst muß also die AKF des Funkkanals geschätzt werden. Untersuchungen haben ergeben, daß es für die Anwendung dieses Diversity Verfahrens ausreichend ist, die Prädiktorkoeffizienten fest einzustellen. Somit können die Autokorrelationsfolgen unterschiedlicher Funkkanäle im Vorfeld geschätzt, und anhand der Ergebnisse die Prädiktorkoeffizienten definiert werden. Sofern in der Basisstation und dem Mobilteil schnellere Prozessoren zur Verfügung stehen als die heute verwendeten, ist es auch denkbar, die AKF fortlaufend während der Übertragung zu schätzen und dann die Prädiktorkoefizienten adaptiv einzustellen.

Für den idealen Koeffizientensatz ergibt sich folgender Zusammenhang

$$P = (R_{VV})^{-1} r_{VV'}$$

wobei p als Koeffizientenvekor definiert ist und r" den sogenannten Autokorrelationsvek-tor des empfangenen Feldstärkeverlaufs beschreibt. Mit R, ist in diesem Fall die Autokorrelationsmatrix gemeint. Eine detailierte mathematische Beschreibung hierzu findet sich in K.D. Kammeyer, Nachrichtenübertragung, Teubner Verlag Stuttgart, 1992.

Ein RSSI-Kriterium A wird als prädiktiver Diversity Algorithmus mit Differenzbildung bestimmt. Bei diesem Algorithmus wird aus den letzten n RSSI-Vergangenheitswerten ein Vorhersagewert für RSSI(T) berechnet. Dieser wird dann mit dem gemessenen RSSI(T) verglichen. Liegt RSSI(T) deutlich unter dem Vorhersagewert, wird ein Antennenwechsel angefordert.

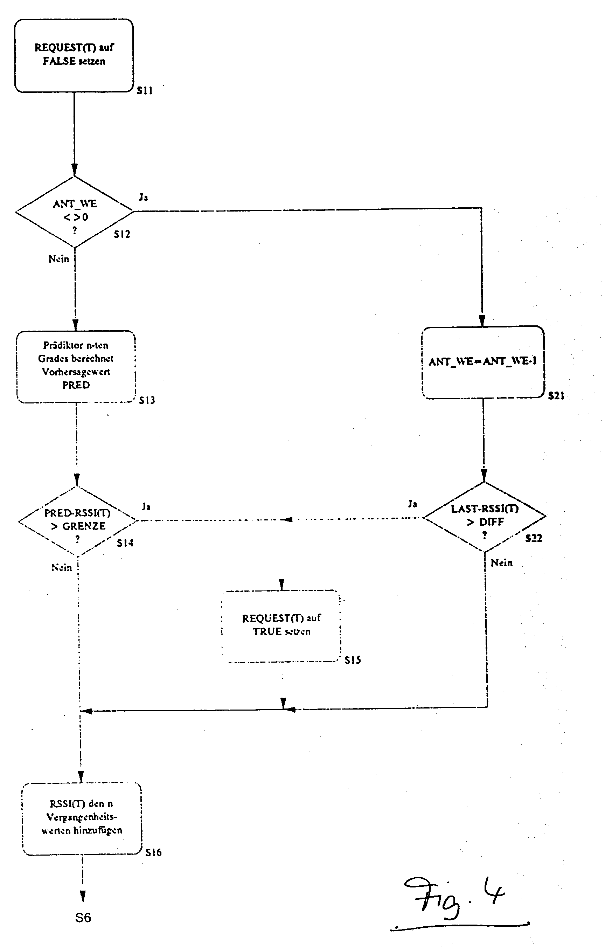

Das Ablaufdiagramm dieses ersten Verfahrens ist Fig. 4 zu entnehmen. Innerhalb des Algorithmus werden einige Variablen benutzt, die hier vorab kurz vorgestellt werden sollen. Der Vorhersagewert für RSSI(T) wird in PRED verwaltet. In GRENZE wird festgelegt, ab welcher Differenz zwischen RSSI(T) und dem Vorhersagewert für RSSI(T) ein Antennenwechsel über REQUEST(T) = TRUE angefordert wird. Zur Kontrolle eines erfolgten Antennenwechsels wird ANT WE verwendet. Außerdem wird mit Hilfe von DIFF überprüft, ob nach einem Antennenwechsel der RSSI-Wert stark abgesunken ist. In LAST bleibt der letzte RSSI-Wert einer Antenne gespeichert, bevor auf eine andere umgeschaltet wird.

Bei Aufruf des RSSI-Kriteriums wird in Schritt 11 zuerst REQUEST(T) auf FALSE gesetzt. Anschließend wird in Schritt 12 überprüft, ob während der letzten n Slots ein Antennenwechsel stattgefunden hat (ANT - WE F 0). Trifft dies nicht zu, wird aus den n Vergangenheitswerten (RSSI(T-i), i = 1, 2, ... , n) mit Hilfe des linearen Prädiktors der Vorhersagewert PRED berechnet (S 13). Danach wird in Schritt 14 die Abweichung des Vorhersagewerts vom real gemessenen RSSI-Wert ermittelt. Dazu wird RSSI(T) von PRED subtrahiert. Sofern die Differenz größer als GRENZE ist, wird Schritt 15 aufgerufen und ein Antennenwechsel angefordert (REQUEST(T) = TRUE).

Abschließend wird in Schritt 16 RSSI(T) den n vergangenen RSSI-Werten hinzugefügt. Dies bedeutet, daß RSSI(T) in die Verzögerungskette des linearen Prädiktors geschrieben wird. Somit kann beim folgenden Aufruf der Vorhersagewert für RSSI(T+1) berechnet werden.

Wurde in Schritt 12 festgestellt, daß ANT - WE F 0 ist, so wird zunächst ANT-WE um eins reduziert (S2 1). Danach wird in Schritt 22 überprüft, ob die Differenz zwischen RS SI(T) und dem letzten RSSI-Wert vor dem Antennenwechsel (LAST) größer als DIFF ist. Trifft dies zu, so wird über REQUEST(T) ein Antennenwechsel angefordert (Schritt 15). Auf diesem Weg wird sichergestellt, daß nach einem Antennenwechsel das Empfangssignal der 'neuen' Antenne nicht einen deutlich niedrigeren Signalpegel hat als das der vorher genutzten.

Danach wird wie für den anderen Weg in Schritt 16 RSSI(T) in die Verzögerungskette des Prädiktors übernommen und abschließend Schritt 6 des globalen Ablaufdiagramms aufgerufen.

Der Einsatz des Prädikators ist nach einem Antennenwechsel für n Zyklen nicht möglich, da in der Verzögerungskette noch die RSSI-Werte der Antenne gespeichert sind, die vor dem Wechsel aktiviert war. Aus diesem Grund wird zu Beginn abgefragt, ob ein Antennenwechsel innerhalb der letzten n Zyklen stattgefunden hat (Schritt 12).

Die Ermittlung eines RSSI-Kriteriums B als prädikativer Diversity Algorithmus wird nachfolgend beschrieben.

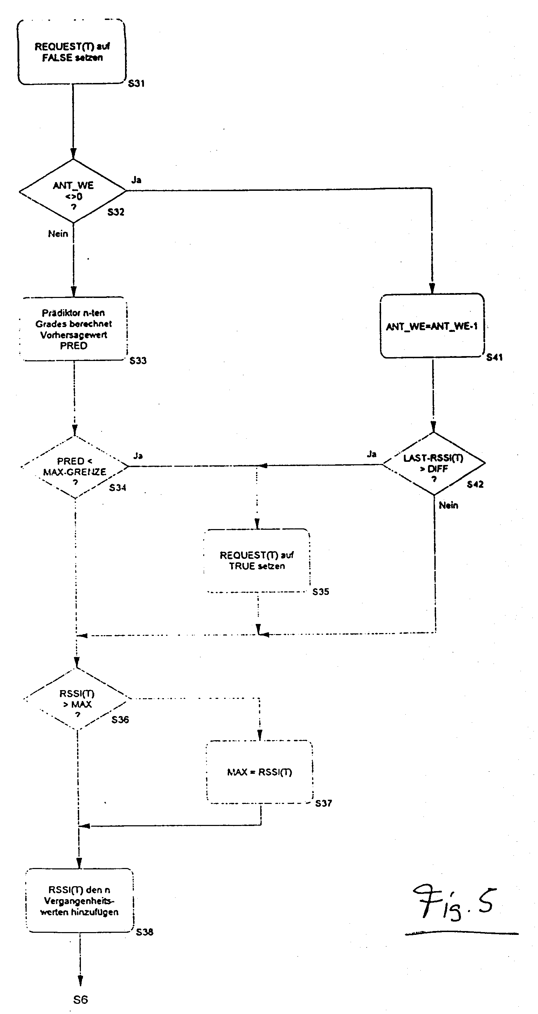

In diesem zweiten Verfahren wird nicht wie in dem ersten Algorithmus die Abweichung zwischen Vorhersagewcrt und gemessenem RSSI-Wert zur Entscheidungsfindung genutzt. Stattdessen wird aus dem aktuellen RSSI-Wert (RSSI(T) ein Vorhersagewert für RSSI(T+1) ermittelt und überprüft, ob dieser Wert deutlich unter dem bisher maximalen RSSI-Wert der aktuellen Antenne liegt. Der Ablauf des Algorithmus ist in Fig. 5 beschrieben.

Auch hier werden einige Variablen zur Steuerung genutzt, ANT - WE, PRED, LAST, sowie DIFF sind wie oben definiert. In MAX wird der bisher maximale RSSI-Wert der aktuell genutzten Antenne gespeichert.

GRENZE gibt hier die zulässige Differenz zwischen dem Vorhersagewert für den nächsten Slot und dem bislang maximalen RSSI-Wert an.

Nachdem das RSSI-Kriterium aufgerufen wurde, wird auch hier zuerst REQUEST(T) auf FALSE gesetzt (Schritt 31). Danach wird in Schritt 32 überprüft, ob ANT-WE 0 ist. Sofern dies der Fall ist, wird ANT WE um eins reduziert (S41) und anschließend in Schritt 42 die Differenz aus RSSI(T) und dem letzten RSSI-Wert der 'alten' Antenne gebildet. Ist diese Differenz größer als DIFF, wird in Schritt 35 REQUEST(T) auf TRUE gesetzt - somit also ein Antennenwechsel beantragt.

Sofern in Schritt 32 ANT - WE = 0 gewesen ist, wird unter Verwendung des linearen Prädiktors der Vorhersagewert PRED ermittelt (S33). Anschließend wird in Schritt 34 festgestellt, ob der Wert von PRED eine deutliche Verschlechterung vorhersagt (PRED < MAX - GRENZE ?). Trifft dies zu, so wird Schritt 35 aufgerufen und REQUEST(T) auf TRUE gesetzt.

Anschließend wird in Schritt 36 für beide soeben beschriebenen Wege RSSI(T) mit MAX verglichen und falls RSSI(T) größer als der bisherige Maximalwert ist, zu Schritt 3 7 verzweigt und MAX auf RSSI(T) gesetzt. Danach wird in Schritt 38 RSSI(T) den vergangenen RSSI-Werten hinzugefügt.

Danach wird Schritt 6 des globalen Ablaufdiagramms aufgerufen.

Auch hier kann der Prädiktor für n Zyklen nach einem Antennenwechsel nicht verwendet werden, da erst die RSSI-Werte der 'alten' Antenne aus der Verzögerungskette geschoben werden müssen.

**Patentansprüche**

1. Vorrichtung zur Steuerung von Antennen einer Sende-/Empfangseinrichtung für Funksignale, die eine Einrichtung zur Messung einer Empfangsfeldstärke (RSSI-M), eine Einrichtung zur Detektion von Synchronisationsausfällen (Sync-Det), eine Einrichtung zur Detektion von Bitfehlern (Bit-Det), eine Steuereinheit und einen Antennenumschalters aufweist, **dadurch gekennzeichnet,** daß eine Übertragung von den drei Meßeinrichtungen RSSI-M, Sync-Det und Bit-Det für einen Empfangszeitraum (Zeitschlitz) T für diesen Zeitraum gemessenen Feldstärke (RSSI(T) sowie von Informationen über das Vorliegen von Synchronisationsausfällen und Bitfehlern zur Steuereinheit (E3) vorgesehen ist und daß die Steuereinheit (E3) einen Analysator aufweist, der anhand dies 5%er drei Meßwerte für den folgenden Empfangszeitraum eine von mehreren Antennen zum Empfang auswählt und entsprechend den Antennenumschalter ansteuert.

2. Vorrichtung nach Anspruch 1, **dadurch gekennzeichnet, daß** die Sende-/Empfangseinrichtung als Mobilteil mit einer Sende-/Empfangsantenne an einer Telekommunikationsanlage oder in einem Funknetz ausgeführt ist und daß eine Übertragung einer von den drei Meßeinrichtungen RSSI-M, Sync-Det und Bit-Det innerhalb eines Empfangszeitraumes (Zeitschlitz) T für diesen Zeitraum gemessenen Feldstärke (RSSI(T)) sowie von Informationen über das Vorliegen von Synchronisationsausfällen und Bitfehlern zur Steuereinheit (E3) vorgesehen ist und daß die Steuereinheit (E3) einen Analysator aufweist, der anhand dieser drei Meßwerte für den folgenden Empfangszeitraum eine von mehreren Sendeantennen an der Basisstation auswählt und daß dies der Basisstation signalisiert wird.

3. Verfahren zur Steuerung von Antennen einer Sende-/Empfangseinrichtung, bei dem eine Empfangsfeldstärke (RSSI), Synchronisationsausfälle und Bitfehler gemessen werden, **dadurch gekennzeichnet, daß** zu jedem gemessenen RSSI-Wert (RSSI(T)) in der Steuereinheit unter Verwendung der n letzten RSSI-Werte (RSSI (T-i)), i = 1, ..., n) einn Vorhersagewert (PRED) für RSSI(T) berechnet wird und ein Antennenwechsel dann durchgeführt wird, wenn ein Synchronisationsausfall vorliegt, mehr als N Zeitschlitze von den letzten M Zeitschlitzen Bitfehler enthielten oder PRED um mehr als ein fest definierter Wert unter RSSI(T)) liegt.

4. Verfahren nach Anspruch 3, **dadurch gekennzeichnet,** daß zu jedem gemessenen RSSI-Wert (RSSI(T) in der Steuereinheit unter Verwendung der n letzten RSSI-Werte (RSSI(T-i), i = 0, ..., n-1) ein Vorhersagewert (PRED) für RSSI(T+I) berechnet wird und ein Antennenwechsel dann durchgeführt wird, wenn ein Synchronisationsausfall vorliegt, mehr als N Zeitschlitze von den letzten M Zeitschlitzen Bitfehler enthielten oder PRED unter einem Schwellwert liegt, der sich aus dem bislang maximalen RSSI-Wert der aktuell genutzten Antenne, vermindert um einen fest definierten Betrag, ergibt.

5. Verfahren nach Anspruch 3 oder 4, **dadurch gekennzeichnet,** daß der Vorhersagewert PRED über einen linearen Prediktor n-ten Grades berechnet wird, der sich durch ein Prädiktionsfilter darstellen läßt, das im Symboltakt arbeitet und dessen Prädiktorkoeffizienten geeignet festgelegt werden.

6. Verfahren nach Anspruch 5, **dadurch gekennzeichnet,** daß die Prädiktorkoeffizienten über die Autokorrelationsfolgen typischer Feldstärkeverläufe (RSSI-Werte) von Funksignalen fest definiert werden.

7. Verfahren nach Anspruch 5 **dadurch gekennzeichnet,** daß die Prädiktorkoeffizienten durch fortlaufende Schätzung der Autororrelationsfolge des empfangenen Feldstärkeverlaufs während der Übertragung (adaptiv) eingestellt werden.

8. Verfahren nach einem der Ansprüche 3 bis 4, **dadurch gekennzeichnet,** daß eine Häufung von Bitfehlern (fehlerhaften Zeitschlitzen) durch Verwendung eines Schieberegisters erkannt wird, in das dic Daten der Einheit Bit-Det geschrieben werden, wobei das Schieberegister in einer FIFO-Struktur organisiert ist (der älteste Wert wird beim Hinzufügen eines neuen Wertes aus dem Schieberegister herausgeschoben) und die Häufung wird durch Summation über die Inhalte des Schieberegisters festgestellt.

Fig. 1

EP 0 755 131 A2

Fig. 2

Fig. 3

REQUEST(T) auf
FALSE setzen

S11

ANT_WE
<>0
?

S12

Ja

Nein

Prädiktor n-ten
Grades berechnet
Vorhersagewert
PRED

S13

ANT_WE = ANT_WE-1

S21

PRED-RSSI(T)
> GRENZE
?

S14

Ja

LAST-RSSI(T)
> DIFF
?

S22

Ja

Nein

Nein

REQUEST(T) auf
TRUE setzen

S15

RSSI(T) den n
Vergangenheitswerten hinzufügen

S16

S6

Fig. 4

11

REQUEST(T) auf
FALSE setzen
S31

ANT_WE
<>0
?
S32

Ja

Nein

Prädiktor n-ten
Grades berechnet
Vorhersagewert
PRED
S33

ANT_WE=ANT_WE-1
S41

PRED <
MAX-GRENZE
?
S34

Ja

LAST-RSSI(T)
> DIFF
?
S42

Ja

Nein

REQUEST(T) auf
TRUE setzen
S35

RSSI(T)
> MAX
?
S36

MAX = RSSI(T)
S37

RSSI(T) den n
Vergangenheitswerten hinzufügen
S38

S6

Fig. 5